# EUROPEAN PATENT SPECIFICATION

(11) **EP 2 547 047 B1**
(45) Date of publication and mention of the grant of the patent: **17.02.2016**
(21) Application number: 11005588.6
(22) Date of filing: 08.07.2011
(51) Int. Cl.: H04L 12/46, H04L 12/717, H04L 29/06, H04L 29/12

(54) **CENTRALIZED SYSTEM FOR ROUTING ETHERNET PACKETS OVER AN INTERNET PROTOCOL NETWORK**
ZENTRALISIERTES SYSTEM ZUR WEGLENKUNG VON ETHERNET PAKETEN IN EINEM IP NETZWERK
SYSTEME CENTRALISE POUR L'ACHEMINEMENT DE PAQUETS ETHERNET SUR UN RESEAU IP

(43) Date of publication of application: 16.01.2013
(73) Proprietor: ALCATEL LUCENT, 92100 Boulogne-Billancourt (FR)
(72) Inventor: Scharf, Michael, 70569 Stuttgart (DE); Banniza, Thomas-Rolf, 71701 Schwieberdingen (DE)
(74) Representative: Knecht, Ulrich Karl

(56) References cited:
- EP-A1- 1 408 659
- EP-A1- 1 414 199
- EP-A1- 1 580 940
- EP-A1- 1 701 491
- EP-A2- 0 915 594

## Description

### Field of Invention

The present invention relates to a method of transmitting Ethernet packets between two or more Ethernet LANs through an interconnecting IP network, a centralised server and a customer edge device (LAN = Local Area Network; IP = Internet Protocol).

### Background

Cloud computing services are typically hosted in data centers that are internally realized by large Ethernet networks. There is a certain trend to decentralize these data centers, i.e. to host services in a larger number of smaller, geographically distributed data centers.

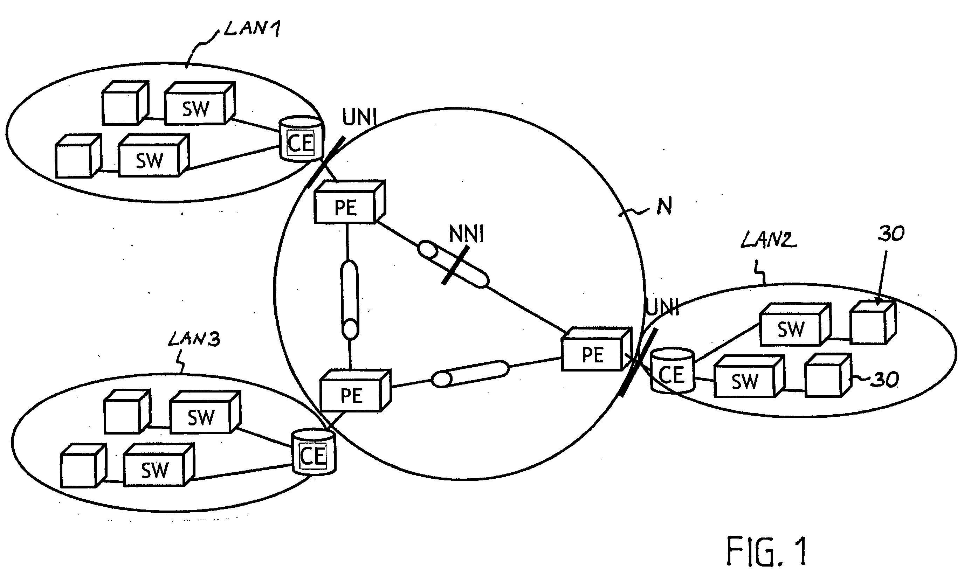

Fig. 1 shows a typical scenario of a data center interconnect over a Wide Area Network (WAN) known in prior art, wherein the data centers LAN1, LAN2, LAN3 typically use a flat Ethernet network or an Ethernet/IP network, in combination with Virtual Local Area Network (= VLAN) and/or specific addressing schemes. Due to their different geographical location, the distributed data center sites LAN1, LAN2, LAN3 have to be interconnected by Wide Area Network technology, such as optical links, Multi Protocol Label Switching (= MPLS) paths, or networks providing connectivity at IP level.

Each data center site LAN1, LAN2, LAN3 is connected to the interconnecting network N by a customer edge device CE. Each data center LAN1, LAN2, LAN3 comprises server farms 30 which are connected via switches SW to the customer edge device CE of the respective data center site LAN1, LAN2, LAN3. The interconnecting network N, which may be a transport network based on IP/MPLS, comprises three interconnected provider edges PE, one for each customer edge device CE. The connection of a customer edge device CE with its associated provider edge PE may be via a user network interface UNI. A connection of a first provider edge PE and a second provider edge PE may be via a network-to-network interface NNI. For simplicity, Fig. 1 assumes that only one Ethernet LAN is attached to the CE. Alternatively, several Ethernet LANs can be attached to a customer edge device, e. g., using different Ethernet interfaces to the CE.

There are many technologies that can interconnect the Ethernet networks LAN1, LAN2, LAN3 over layer 1, layer 2, or layer 3 links. Their common objective is to transparently interconnect all Ethernet networks LAN1, LAN2, LAN3. The customer edge devices transport, i.e. tunnel, the Ethernet traffic over the WAN in a multi-point to multi-point way. By tunneling Ethernet or IP transparently over the WAN, the WAN is invisible for the nodes in each data center. From the perspective of the data center, the customer edge device is similar to a standard Ethernet switch/bridge, obviously apart from the larger delay in the WAN.

EP 0 915 594 A2 describes methods and systems for routing information in an integrated global communications network comprising a signalling system interconnecting a source router, a plurality of intermediate routers, a destination router and a router processor for routing the multimedia information. The source router receives the information including the routing requirements associated with the information and transmits a routing query signal to the routing processor. The routing processor evaluates the routing requirements, determines which routers and communication paths are capable and available to route the information, evaluates the statistical availability of such routers and selects an optimal routing path comprising select ones of the available routers and communication paths.

EP 1 701 491 A1 describes a method and apparatus for providing traffic management through dynamic and granular definitions of route groups. Within a communications network, a traffic routing control unit creates route group assignments for each route within a customer network in accordance with a customer's routing plan, determines protocol control values to be set with each edge router of the network to fulfil the group assignments and uses border gateway protocol to set the protocol control values in the edge routers to facilitate fulfilling the route group assignments.

EP 1 580 940 A1 describes a method and apparatus for managing route selection in a network. The method comprises receiving a set of routes from each of a plurality of routers, filtering each of the sets of routes and selecting at least one route from each of the filtered sets of routes according to routing information associated with each of the respective routers.

It is the object of the present invention to provide an improved solution for an interconnection of distributed Ethernet LANs over an IP network.

### Summary

An object of the present invention is achieved by a method of transmitting Ethernet packets according to claim 1 of the present invention. A further object of the present invention is achieved by a centralized server according to claim 9 of the present invention. A further object of the present invention is achieved by a system according to claim 13 of the present invention.

The two or more Ethernet LANs and the interconnecting IP network form an overlay network. The invention realises an overlay system that transparently interconnects Ethernet networks over an IP network, i.e. an Ethernet-over-IP solution that is optimized for data centers. In this description the terms "data center", "data center site" and "site" are used synonymously with the term "Ethernet LAN".

The invention provides a simple and scalable solution that neither requires static IP tunnels nor explicit path management, e.g. MPLS label switched paths.

The invention provides a centralised server, i.e. a single point to which the Ethernet-over-IP system can peer. Therefore, unlike in known approaches which use a distributed control plane, embodiments of the invention make it possible to apply global policies and to link the data center interconnect solution with control and management systems, either a network management, or a cloud computing management, e.g. a cloud orchestration layer.

The use of a centralized server is supported by research results that show that commercial-of-the-shelf personal computer technology is able to process of the order of 100,000 signalling messages per second between a centralized controller and several network devices, over TCP connections. There is a certain similarity to the OpenFlow technology, which also use one centralized server, which is called controller. The expected order of magnitude of control traffic in the proposed system is much smaller, i.e., a centralized server is sufficiently scalable. The centralised server is logically a centralized entity, but may of course be realized in a distributed way, e.g., to improve the resilience. Distributed realisations of the centralised server may also use load balancing.

The invention provides an advantageous alternative or complement to the standardized, multi-vendor solution known as Virtual Private Local Area Network Service (= VPLS), if only IP connectivity is available. VPLS is based on MPLS. While VPLS is an appropriate solution whenever an MPLS link to each data center site is available, this requirement will not necessarily be fulfilled if a larger number of small data centers are used for cloud computing offers, or, e. g., distributed Content Delivery Network (= CDN) caches. In that case, at least a subset of sites may only be connected via IP links, or the public Internet. This implies that a pure MPLS-based solution may not be sufficient. This gap is covered by the present invention.

Furthermore, the setup of a full mesh of MPLS paths is complex and limits the dynamics of the data center interconnection solution. Tunneling of MPLS over IP would result in additional overhead. The invention provides an improved solution which avoids the aforementioned disadvantages.

The invention proposes a new technology to interconnect Ethernet networks over an IP network, using a centralized server in combination with overlay network mechanisms.

One of the main benefits of the invention is its simplicity. The invention neither requires a complex setup of tunnels nor specific support by an interconnecting network. The invention makes it possible to interconnect data center Ethernet networks over any IP network, even without involvement of the network provider. Also, the use of a centralized server with a potentially global view on the Ethernet network simplifies the enforcement of policies and intelligent traffic distribution mechanisms.

The service provided by the invention differs from other VPN solutions (VPN = Virtual Private Network). Unlike IPsec VPNs, this invention does not focus on encryption and thereby avoids the complexity of setting up the corresponding security associations (IPsec = Internet Protocol Security). Still, the invention can be natively implemented on top of IPsec. The invention also differs from tunneling solutions such as L2TP/ L2TPv3 and PPTP, as it is a soft-state solution only with no explicit tunnel setup (L2TP = Layer 2 Tunneling Protocol; PPTP = Point-to-Point Tunneling Protocol). This results in less configuration overhead and the ability to scale to a large number of data center sites.

The invention does not use IP multicast or extended routing protocols, but a centralized server instead, which is simpler and enables centralized control and management. Most notably, the invention does not use extensions of the IS-IS routing protocol, operates on a per-destination-address basis, not on a per-flow basis, provides additional overlay topology management functions, and scales to large networks.

The invention relies on a centralized server instead of proprietary routing protocol extensions. A centralized server is simpler to implement, deploy, and operate than an overlay that requires several IP multicast groups. It can also very easily be coupled with other control and management systems, e. g., for the dynamic configuration of policies.

Compared to the existing data center interconnect solutions that use static tunnels or label switched paths, e. g. VPLS, the invention is much simpler to configure and implement, as the edge devices only require a minimum initial configuration and only maintain soft state for the traffic in the overlay. As in the framework of the invention it is easy to add and remove sites from the overlay, Ethernet interconnectivity can be offered even for a large number of highly distributed data center sites that are turned on and off frequently.

Further advantages are achieved by embodiments of the invention indicated by the dependent claims.

According to an embodiment of the invention, the control information is related to one or more of: mapping of Ethernet addresses of network devices of Ethernet LANs to IP addresses of customer edge devices, information concerning a scope of Ethernet LANs and/or VLAN tags, Address Resolution Protocol (ARP) information, membership information of multicast groups inside the Ethernet LANs, filtering policies, firewall rules, overlay topology, information about path characteristics between customer edge devices, bootstrapping and configuration information for devices joining an overlay network comprising the two or more Ethernet LANs.

Instead of transporting control information inside a routing protocol between the customer edge devices, the inventive method uses a centralized server. Each customer edge device is connected to the centralised server by a control connection, preferably a TCP connection, and exchanges control information (TCP = Transmission Control Protocol). Specifically, this control connection transports
- mappings of Ethernet addresses to the IP addresses of customer edge devices,
- information concerning the scope of Ethernet VLANs,
- Address Resolution Protocol (ARP) information,
- membership information of multicast groups inside the data center network segments,
- filtering policies such as firewall rules,
- overlay topology and information about the path characteristics between the customer edge devices, and
- bootstrapping and configuration information for devices joining the overlay.

The customer edge devices report information to the centralised server, which distributes the information then to the other customer edge devices, and preferably also maintains a global view of the whole data center network and the attachment of Ethernet devices in the different Ethernet segments. The control connections can also be encrypted, e.g. using the Transport Layer Security (= TLS), in order to protect the data integrity and preferably to enable an authentication and authorization of customer edge devices joining the overlay.

According to another embodiment of the invention, the method further comprises the steps of reporting, by one or more of the customer edge devices, control information to the centralised server; managing, by the centralised server, the received control information and distributing processed control information to one or more of the customer edge devices including a first customer edge device associated with a first Ethernet LAN of the two or more Ethernet LANs; and using, by the first customer edge device, the received control information for controlling a transmission of Ethernet data traffic from a first network device of the first Ethernet LAN through the interconnecting IP network to a second network device of a second Ethernet LAN of the two or more Ethernet LANs.

According to another embodiment of the invention, the method further comprises the steps of sending, by a first network device of a first Ethernet LAN of the two or more Ethernet LANs, an Ethernet packet destined for an Ethernet address of a second network device of a second Ethernet LAN of the two or more Ethernet LANs; receiving, by a first customer edge device associated with the first Ethernet LAN, the Ethernet packet and checking if a forwarding table managed by the first customer edge device contains a mapping of the Ethernet address of the second network device to an IP address of a customer edge device associated with the second Ethernet LAN; if the forwarding table does not contain the said mapping, sending by the first customer edge device an address resolution request to the centralised server and receiving from the centralised server in response to the address resolution request a reply message specifying the said mapping; encapsulating, by the first customer edge device, the Ethernet packet with an encapsulation header inside an IP packet comprising a destination address of the second customer edge device according to the mapping; sending the encapsulated Ethernet packet via the interconnecting IP network to the second customer edge device; and decapsulating, by the second customer edge device, the received Ethernet packet for delivery within the second Ethernet LAN to the second network device. The customer edge devices should drop packets with destination Ethernet addresses that cannot be resolved.

The encapsulation header at least comprises an IP header. In addition, further shim layers may be used for encapsulation, most notably the User Datagram protocol (UDP) or the Generic Routing Encapsulation (GRE), or both.

The customer edge devices tunnel Ethernet packets over the IP network by encapsulating them into IP packets, e.g. UDP packets, without requiring the explicit setup of tunnels (UDP = User Datagram Protocol). The IP addresses of the destination customer edge device are learned from the centralised server if they are not already locally known. Ethernet packets are then transported over the IP network to the destination customer edge devices, decapsulated there, and finally delivered to the destination Ethernet device inside the destination data center LAN.

A UDP encapsulation of data plane packets and a TCP-based control connection to the centralised server works in environments where other protocols, such as IP multicast or routing protocols, are blocked. Other benefits of the invented architecture include:
- Auto-configuration: It is very simple to set up and configure the invented method. Adding a new data center site mainly requires the configuration of the address of the centralised server in the customer edge device of the new data center. The edge device then connects to the centralised server and obtains further required information about the overlay from the centralised server.
- Realization of highly dynamic virtual networks with simple policy enforcement: As the centralised server can keep track of the overlay network state, it can quickly react to changes, e.g. caused by mobility of Virtual Machines and enforce policies. The centralised server can also enforce specific routing schemes.
- Flexible overlay topology management: Due to performance measurements according to the invented method, an optimized traffic distribution between the data center sites is possible, e.g. by multi-hop routing.
- Central point of contact: As the centralised server has a global view of the network, it can easily be connected with other network or cloud control and management systems.
- Mitigation of address resolution message broadcast storms: The preferably used caching of address resolution information both in the server and in the customer edge devices reduces the need for Ethernet broadcasts and the resulting problems.

In an embodiment, the method further comprises the steps of intercepting, by a first customer edge device associated with a first Ethernet LAN of the two or more Ethernet LANs, an Address Resolution Request (ARP) sent by a first network device of the first Ethernet LAN, if the first network device intends to resolve an IP address of a second network device located in a second Ethernet LAN to the corresponding Ethernet address, blocking the request if the address mapping of the IP address of the second network device to the Ethernet address of the second device is not known, and sending a corresponding lookup request from the first customer edge device to the centralised server; after receipt of the lookup request, forwarding by the centralised server the lookup request to all other customer edge devices except the first customer edge device; after receipt of the lookup request, distributing by the other customer edge devices, the lookup request among the network devices of the respective Ethernet LANs; receiving, by the other customer edge devices, lookup replies from the network devices of the respective Ethernet LANs and forwarding the lookup replies to the centralised server; managing and processing the received lookup replies by the centralised server and sending a lookup reply to the first customer edge device which had initiated the lookup request; and sending, by the first customer edge device, the lookup reply to the first network device which had initiated the address resolution request.

According to another embodiment of the invention, the method further comprises the steps of announcing, by the centralised server, the lookup reply which is sent by the centralised server to the first customer edge device also to the other customer edge devices for their learning of addresses from the centralised server, i.e. so that they learn the addresses from the centralised server and can store them in an ARP table or in the forwarding table in the customer edge device, similar to an ARP proxy.

According to another embodiment of the invention, the method further comprises the steps of measuring, by at least one of the customer edge devices, path characteristics and sending the measured path characteristics to the centralised server; establishing, by the centralised server, topology characteristics regarding the communication between the two or more Ethernet LANs on the basis of the received path characteristics; announcing, by the centralised server, the established topology characteristics to the customer edge devices; and making use of this information in routing decisions by at least one of the customer edge devices.

According to another embodiment of the invention, in a case where the interconnecting IP network connects at least three Ethernet LANs, the method further comprises the steps of routing, on account of announced topology characteristics, an ongoing communication between a first and a second Ethernet LAN of the at least three Ethernet LANs via a third customer edge device of a third Ethernet LAN of the at least three Ethernet LANs.

Using the topology information established by the centralised server, customer edge devices can also use more sophisticated forwarding and traffic engineering mechanisms. Specifically, embodiments of the invention allow a multi-hop forwarding in the overlay to move traffic away from congested links between two data center sites. In practice, two hops will be sufficient in most cases. The invention does not use IP multicast. Instead any multicast or broadcast traffic is duplicated in the customer edge devices and forwarded point-to-point in UDP datagrams to each customer edge device. This design, which is similar to the handling of such packets in VPLS, avoids problems in networks not supporting IP multicast.

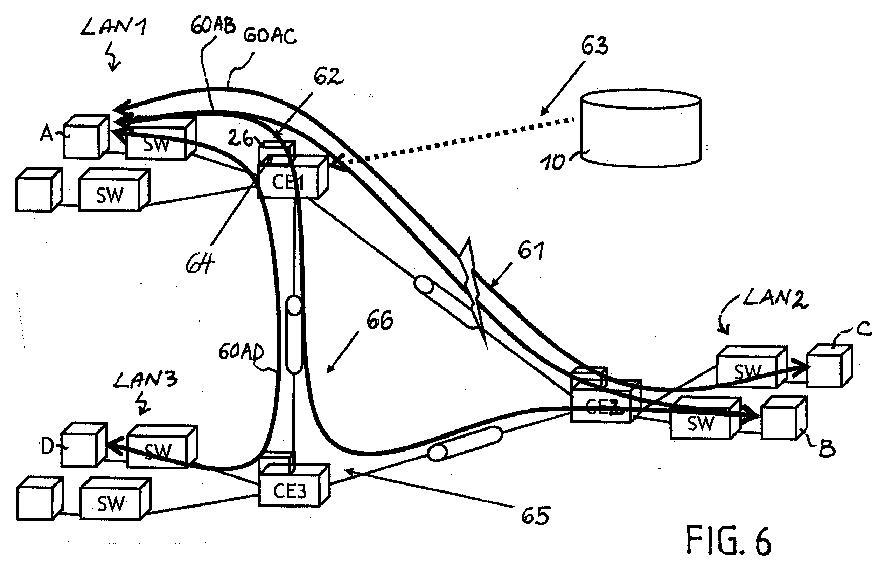

Most notably, the use of multi-hop forwarding allows bypassing a potentially congested link between two data center sites, if there is an alternative path. The global view of the network at the centralised server, as well as the distribution of path characteristic measurements to the customer edge devices enable a better load balancing and intelligent routing, also if sites are multi-homed. If there is an alternative uncongested path in the overlay, as shown in Figure 6 below, the invention achieves a significantly larger throughput between data center sites compared to a solution that only uses point-to-point forwarding between the customer edge devices.

According to another embodiment of the invention, the centralised server further comprises a data base containing at least one mapping of an Ethernet address of a network device of one of the Ethernet LANs to an IP address of a customer edge device of the respective Ethernet LAN with which the network device is associated.

According to another embodiment of the invention, the database of the centralised server further contains at least one address mapping of an Ethernet address of a network device of one of the Ethernet LANs to its corresponding IP address, so that the centralized server can answer Ethernet address lookup queries without Address Resolution Protocol broadcasts.

According to another embodiment of the invention, the centralised server further comprises an interface to a network or cloud computing management system that provides for instance policies or monitors the overlay.

According to another embodiment of the invention, the customer edge device further comprises a forwarding table containing at least one mapping of an Ethernet address of a network device of one of the at least one further Ethernet LAN to an IP address of the respective customer edge device of the at least one further Ethernet LAN with which the network device is associated.

According to another embodiment of the invention, the customer edge device further comprises a path metering unit adapted to measure path characteristics and that the customer edge device is adapted to send the measured path characteristics to the centralised server.

According to another embodiment of the invention, the customer edge device further comprises an address resolution proxy adapted to analyze an Address Resolution Request (ARP) sent by a network device of the Ethernet LAN in order to receive information related to the address mapping of IP and Ethernet addresses of a destination network device addressed in the ARP request. If the address mapping is not known yet by the customer edge device, the request is blocked and a corresponding lookup request is sent to the centralised server over the control connection. If the address mapping is already known from the ARP table in the customer edge device, a corresponding ARP reply is sent back to the network device. In both cases, the transport of the ARP messages over the overlay can be avoided.

According to a preferred embodiment, the address resolution proxy learns address mappings of the IP and Ethernet addresses of the destination network device from the centralised server and directly replies to the intercepted Address Resolution Protocol request from the network device if the address mapping is already known. The address resolution proxy may also learn address mappings by other means, for instance by monitoring of ongoing traffic or additional ARP lookups.

### Brief Description of the Figures

These as well as further features and advantages of the invention will be better appreciated by reading the following detailed description of exemplary embodiments taken in conjunction with accompanying drawings of which:
- Fig. 2: is a diagram of the architecture of an overlay network according to the present invention;
- Fig. 3: is a diagram showing the tunneling of an Ethernet packet between Ethernet LANs over IP;
- Fig. 4: is a diagram of an Ethernet address resolution over a centralised server;
- Fig. 5: is a diagram of collecting and distributing overlay topology information and performance measurements;
- Fig. 6: is a diagram of a multi-hop routing in the overlay between different Ethernet LANs;
- Fig. 7: is a diagram of the basic architecture of a customer edge device; and
- Fig. 8: is a diagram of the basic architecture of a centralised server.

### Description of the Embodiments

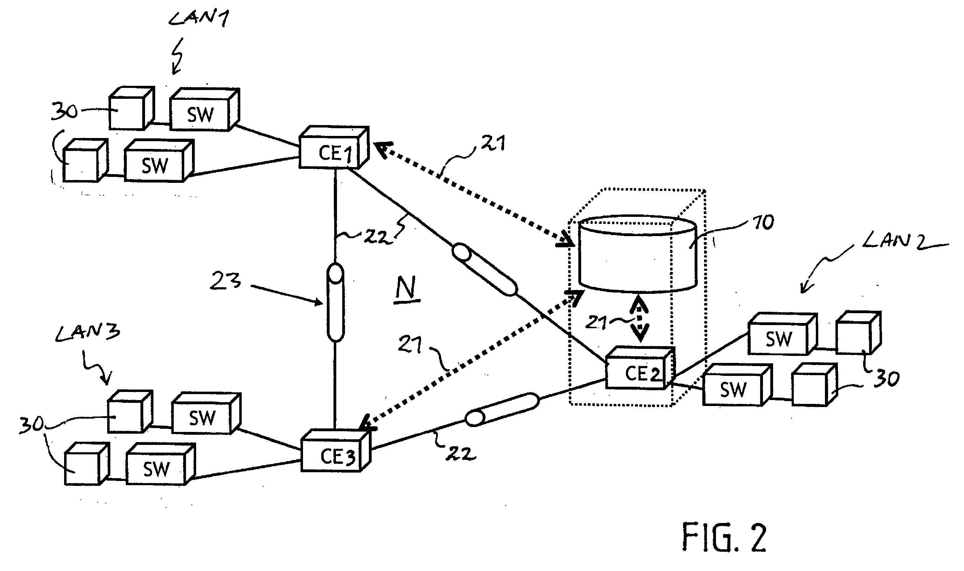

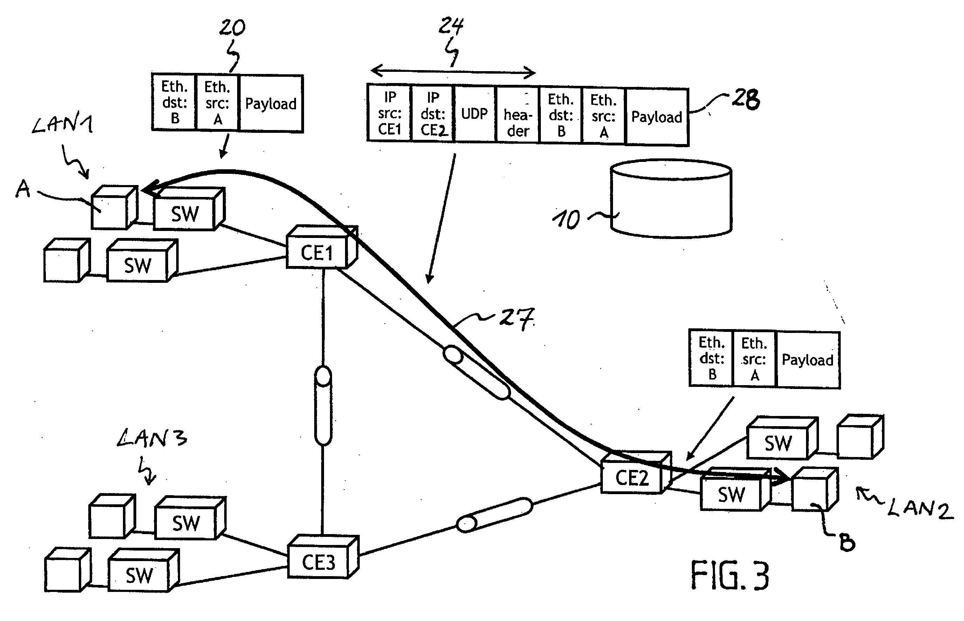

Fig. 2 shows an overlay network according to an embodiment of the present invention. The overlay network comprises three Ethernet LANs, LAN1, LAN2, LAN3, and an interconnecting network N. One or more of the Ethernet LANs may be connected to the interconnecting network N by a respective customer edge device, e.g., CE1, CE2, CE3. Each Ethernet LAN LAN1, LAN2, LAN3 comprises server farms 30 which are connected via Ethernet switches SW to the customer edge device CE1, CE2, CE3 of the respective Ethernet LAN LAN1, LAN2, LAN3. The interconnecting network N may be an IP network such as the Internet. The customer edge devices CE1, CE2, CE3 are interconnected via network links 22 for the transmission of data traffic packets. An Ethernet packet originating from a first Ethernet LAN LAN1 is transmitted via the network links 22 through the interconnecting network N to a second Ethernet LAN LAN2 in the form of an Ethernet-over-IP encapsulation 23, as is explained in more detail in connection with Fig. 3.

A key component of the overlay network is a centralized server 10 that handles the exchange of control plane messages associated with a transmission of Ethernet packets between Ethernet LAN through the interconnecting network in an Ethernet-over-IP transmission mode. Therefore, unlike in prior art, no modifications of routing protocols etc. are required. The invention only requires some additional functionality in the customer edge devices CE1, CE2, CE3, as detailed below. The centralised server 10 can either be a stand-alone device, e.g. a high-performance personal computer, or it can be integrated in one of the customer edge devices, as indicated by the dotted outline of a box in Fig. 2, in which case the centralised server 10 is a kind of master device for the overlay. Both alternative realizations can provide the same service. Each customer edge device CE1, CE2, CE3 maintains a control connection 21 - preferably a Transmission Control Protocol (= TCP) or a Transport Layer Security (= TLS) connection - to the centralised server 10. Over these connections to each CE, information about the overlay are exchanged, including the mapping of Ethernet addresses to sites, the overlay topology, certain policies, etc.

Fig. 3 illustrates, in the overlay network of Fig. 2, the process of tunneling of an Ethernet packet between Ethernet LANs over IP, i.e. a data plane operation. A first network device A of a first Ethernet LAN LAN1 of the three Ethernet LANs LAN1, LAN2, LAN3 sends an Ethernet packet 20. The Ethernet packet 20 contains as destination address an Ethernet address of a second network device B of a second Ethernet LAN LAN2 of the two or more Ethernet LANs LAN1, LAN2, LAN3, as source address the Ethernet address of the first network device A, and a payload. The customer edge device CE1 associated with the first Ethernet LAN LAN1 receives the Ethernet packet 20 and determines from a forwarding table 31 managed by the first customer edge device CE1 a mapping of the Ethernet address of the second network device B to an IP address of a customer edge device CE2 associated with the second Ethernet LAN LAN2. The first customer edge device CE1 encapsulates the Ethernet packet 20 with an IP header 24 comprising an IP address of the source customer edge device CE1, an IP address of the destination customer edge device CE2, and further header fields according to the chosen encapsulation protocol. The source customer edge device CE1 sends the encapsulated Ethernet packet 28 with the encapsulation header 24 via a network link 22 through the interconnecting IP network N to the destination customer edge device CE2. The second customer edge device CE2 decapsulates the received Ethernet packet 20 for delivery within the second Ethernet LAN LAN2 to the second network device B. As a result, an end-to-end transfer 27 between the hosts A and B in the Ethernet LANs is achieved.

For all Ethernet addresses that are known to be located in other sites, the Ethernet packets are encapsulated into an IP encapsulation packet, e.g. an UDP packet, using an additional header, and then sent via IP to the IP address of the customer edge device at the destination Ethernet LAN. This data plane operation is similar to other tunnel solutions.

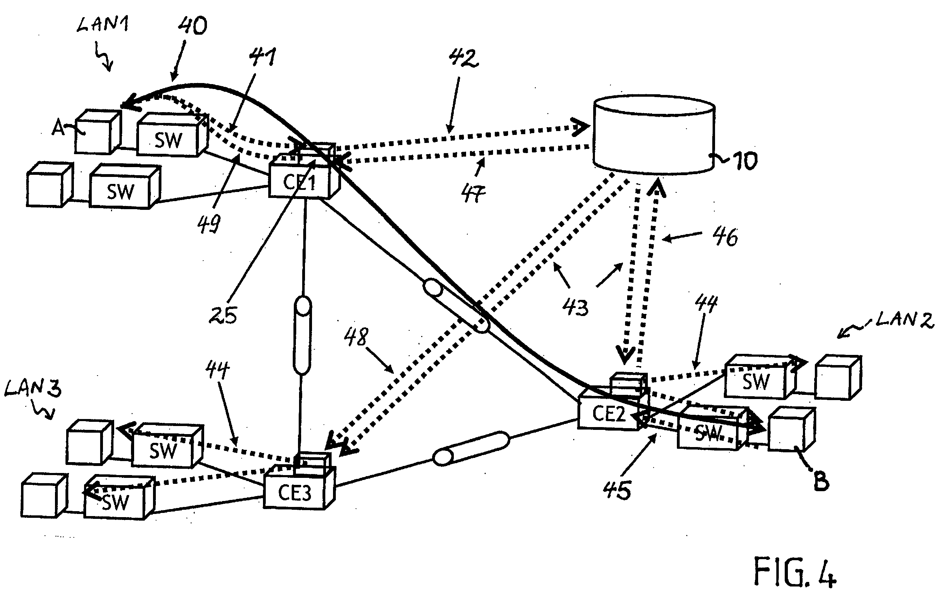

Fig. 4 illustrates, in the overlay network of Fig. 2, an Ethernet address resolution over a centralised server 10, i.e. a control plane function. A new data connection 40 is to be established from a first network device A of a first Ethernet LAN LAN1 of the two or more Ethernet LANs LAN1, LAN2, LAN3 to a second network device B of a second Ethernet LAN LAN2 of the two or more Ethernet LANs LAN1, LAN2, LAN3. A first customer edge device CE1 associated with the first Ethernet LAN LAN1 blocks an address resolution request 41 sent by the first network device A and sends a corresponding lookup request 42 from the first customer edge device CE1 to the centralised server 10, assuming that the address mapping is not already locally known in CE1. After receipt of the lookup request 42, the centralised server 10 forwards 43 the lookup request to all other customer edge devices CE2, CE3 except the source customer edge device, i.e. the first customer edge device CE1. Not shown in Figure 2 is that as alternative the server 10 could also directly respond to the lookup request, if the address mapping is already known in its ARP table. After receipt of the forwarded lookup request 43, the other customer edge devices CE2, CE3 distribute the lookup request 44 as an ARP lookup among the network devices of the respective Ethernet LANs LAN2, LAN3. The other customer edge device CE2 associated with the Ethernet LAN LAN2 wherein the destination network device B is located receives the corresponding lookup reply from the destination network device B and forwards the lookup reply 46 to the centralised server 10. The centralised server 10 manages and processes the received lookup reply 46 and sends a lookup reply 47 to the first customer edge device CE1 which had initiated the lookup request 42. The first customer edge device CE1 sends the lookup reply 49 to the first network device A which had initiated the address resolution request 40.

Further, the centralised server 10 announces 48 the lookup reply 47 which is sent by the centralised server 10 to the first customer edge device CE1 also to the third customer edge device CE3 for its learning of addresses from the centralised server 10. By storing this information in an ARP table, the other customer edge devices can in future answer address lookup queries and encapsulate and forward packets to those destinations without interacting with the server.

A customer edge device CE1, CE2, CE3 only forwards an Ethernet packet to the overlay if the destination address is known. The customer edge devices CE1, CE2, CE3 learn addresses from the centralized server 10. The learning from the centralized server 10 is one of the key differentiators compared to prior art systems. The invention does not need established multicast trees or routing protocol extensions. The address learning is handled as follows:
- The customer edge device blocks the forwarding of ARP messages to the WAN interfaces.
- ARP lookups are handled by a corresponding protocol via the centralized server 10.
- ARP responses are sent back via the centralised server 10, which announces addresses to all customer edge devices CE1, CE2, CE3.
- The customer edge devices CE1, CE2, CE3 may incorporate an ARP proxy 25 to reply to lookups learnt via the control plane. This requires an ARP table with corresponding address mappings and mechanisms to update and remove those entries, for instance by aging-out mechanisms.

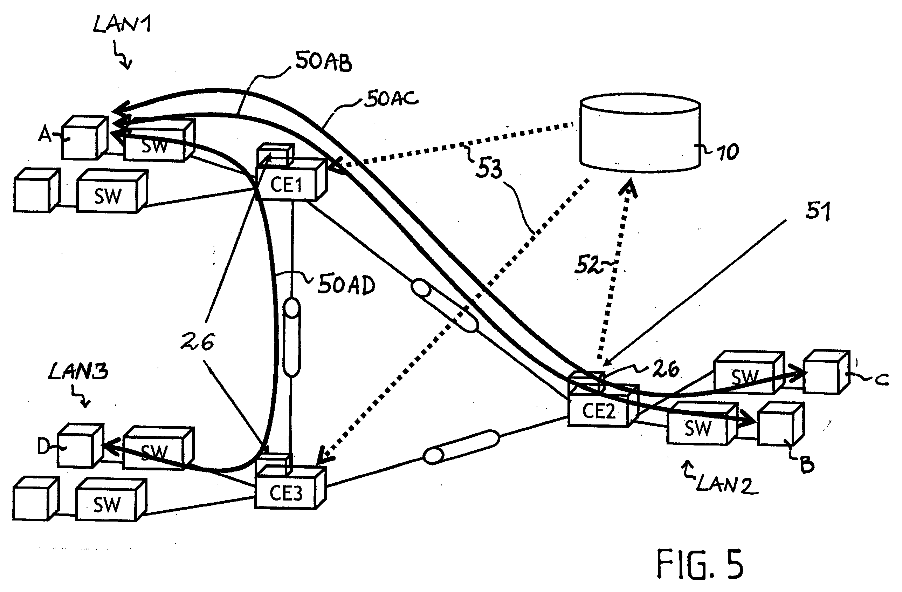

Fig. 5 illustrates, in the overlay network of Fig. 2, performance and overlay measurement, collection of measurement data, announcement of path characteristics and distribution of overlay topology information.

A first data connection 50AB is established from a first network device A of a first Ethernet LAN LAN1 of the two or more Ethernet LANs LAN1, LAN2, LAN3 to a second network device B of a second Ethernet LAN LAN2 of the two or more Ethernet LANs LAN1, LAN2, LAN3. A second data connection 50AC is established from the first network device A to a third network device C of the second Ethernet LAN LAN2. A third data connection 50AD is established from the first network device A to a fourth network device D of a third Ethernet LAN LAN3 of the two or more Ethernet LANs LAN1, LAN2, LAN3.

Path metering units 26 of the customer edge devices CE1, CE2, CE3 measure 51 path characteristics of the data transmission paths 50AB, 50AC, 50AD from all known other customer edge devices CE1, CE2, CE3, e.g. by measuring packet loss, optionally also packet delay, and send 52 the measured path characteristics to the centralised server 10, e.g. in the form of a path characteristics report. The centralised server 10 establishes topology characteristics regarding the data transmission, i.e. communication, between the three Ethernet LANs LAN1, LAN2, LAN3 on the basis of the received path characteristics. The centralised server 10 announces 53 the established topology characteristics to the customer edge devices CE1, CE2, CE3. At least one of the customer edge devices CE1, CE2, CE3 makes use of this information in subsequent routing decisions.

The method uses the centralised server 10 to distribute delay and load information for all paths 50AB, 50AC, 50AD, in order to enable optimized overlay routing as described below. This measurement uses the following techniques:
- At least one customer edge device measures the performance of the paths from all known other customer edge devices, i.e. the interface throughput when encapsulating packets. Note that, assuming predominantly TCP traffic, the throughput is a lower bound of the available path bandwidth.
- The customer edge devices may also send ICMP ping messages or other probe messages to all known other customer edge devices (ICMP = Internet Control Message Protocol).
- The customer edge devices periodically report the path characteristics per destination customer edge to the centralised server.
- The centralised server maintains an overlay topology map, i.e. it stores the available bandwidth, delay, and loss on all overlay paths.
- The centralised server announces the topology characteristics to all customer edge devices. The customer edge devices may use this information for multi-hop routing or also for load balancing at and/or towards multi-homed sites.

Fig. 6 illustrates, in the overlay network of Fig. 5, a multi-hop routing in the overlay between different Ethernet LANs.

Of three ongoing data transmission paths 60AB, 60AC, 60AD, two paths 60AB, 60AC suffer from a congestion 61 in the interconnecting network N, namely a first path 60AB between the network device A in a first Ethernet LAN LAN1 and a second network device B of a second Ethernet LAN LAN2, and a second path 60AC between the network device A in the first Ethernet LAN LAN1 and a third network device C of the second Ethernet LAN LAN2. From path measurements, e.g. from ICMP pings, by means of a path metering unit 26 of the customer edge device CE1 connecting the first Ethernet LAN LAN1 to the interconnecting network N, the customer edge device CE1 notices 62 a loss and/or delay of Ethernet packets transmitted on these congested paths 60AB, 60AC. Alternatively, the problem could also be noticed by CE2. Triggered by a corresponding control message reporting the congestion sent via the control connection from the customer edge device CE1 to the centralised server 10, the centralised server 10, based on its established topology characteristics of the overlay network, announces 63 that the third ongoing data transmission path 60AD between the network device A in a path between a third customer edge device CE3 of a third Ethernet LAN LAN3 and a second customer edge device CE2 of the second Ethernet LAN LAN2 is not congested.

Consequently the first customer edge device CE1 of the first Ethernet LAN LAN1 sends 64 at least a part of the data traffic from the congested data transmission paths 60AB, 60AC, namely the data traffic from the congested data transmission path 60AB, to the third customer edge device CE3. Subsequently, the third customer edge device CE3 forwards 65 the packet to the destination address of the final destination to the second customer edge device CE2. This can be achieved by decapsulating the received Ethernet packets and encapsulating them again with the new destination address. This way the data traffic between the network devices A and B is re-routed 66 via the second customer edge device CE2.

Embodiments of the invention achieve an overlay multi-hop routing. Such overlay routing is not considered by prior art data center interconnect solutions. Multi-hop routing in the overlay between the sites can work around congestion or suboptimal IP routing on the direct path, if there are more than two sites attached to the overlay. This preferably triangular re-routing can result in a larger delay, but still may be beneficial to improve the overall throughput. Yet, a fundamental challenge is loop prevention. The overlay routing in ECO is realized as follows:
- The method only supports two forwarding hops in overlay, in order to avoid complex loops.
- The first hop of a 2-hop tunnel is marked in the tunnel header, for instance by a bit flag; if the bit is set, the first customer edge device decapsulates and encapsulates packets again. An alternative solution, which does not require any header bits, is that the encapsulating customer edge device just uses two nested tunnels.
- The first hop never forwards packets back to the source site.

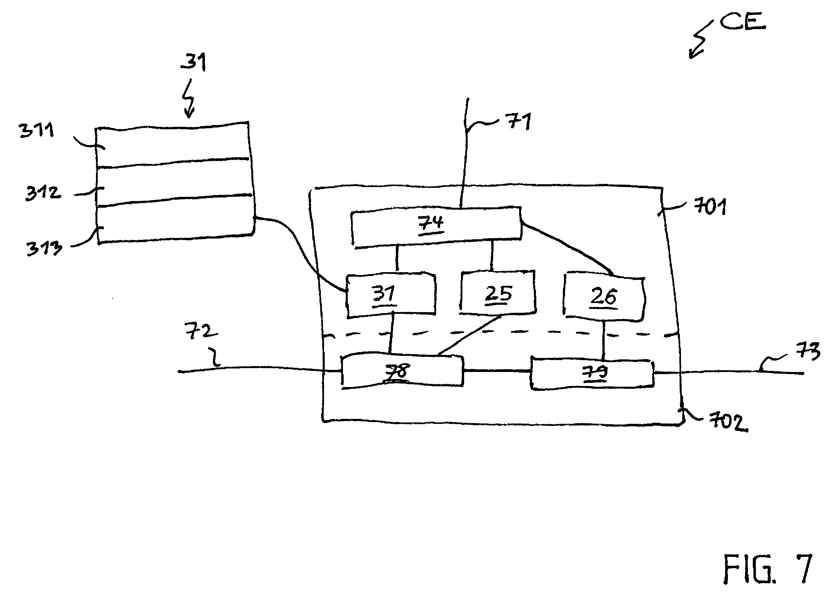

Fig. 7 illustrates an embodiment of a customer edge device CE. The customer edge device CE comprises a first interface 71 for a TCP connection to a centralised server, at least one second interface 72 to an Ethernet LAN, preferably in the form of a data center, and at least one third interface 73 to the interconnecting IP network, i.e. the overlay. The customer edge device CE comprises a protocol engine 74 for managing a protocol used for the control message exchange with a centralised server of the overlay network. The customer edge device CE comprises a forwarding table 31, an ARP proxy 25, a path meter unit 26, an Ethernet switching unit 78 and an encapsulation unit 79 that encapsulates the Ethernet packets in IP packets and that adds further shim protocols if required for the transport over the WAN. The forwarding table 31 comprises mappings between entries in a first section 311 with Ethernet addresses of destinations, in a second section 312 with local interfaces, and in a third section 313 with IP addresses of target customer edge devices. The forwarding table 31, the protocol engine 74, the ARP proxy 25, and the path meter unit 26 are located in a slow path part 701 of the customer edge device CE, whereas the Ethernet switching unit 78 and an encapsulation unit 79 are located in a fast path part 702 of the customer edge device CE.

Fig. 7 illustrates the main and additional functional components of a customer edge device, which is typically a router but acts as an Ethernet switch/bridge towards the internal network interface or interfaces. Preferably, the important functions are:
- Encapsulation/decapsulation of Ethernet packets in IP, adding an additional header, preferably on top of UDP
- Extension of the forwarding data base for remote nodes by the IP address of the destination customer edge device
- Control plane learning of Ethernet addresses and ARP proxy
- Packet filtering and dropping of Ethernet packets to unknown destination Ethernet addresses
- Path characteristic measurement and overlay routing functions
- Communication with the centralised server over a TCP connection

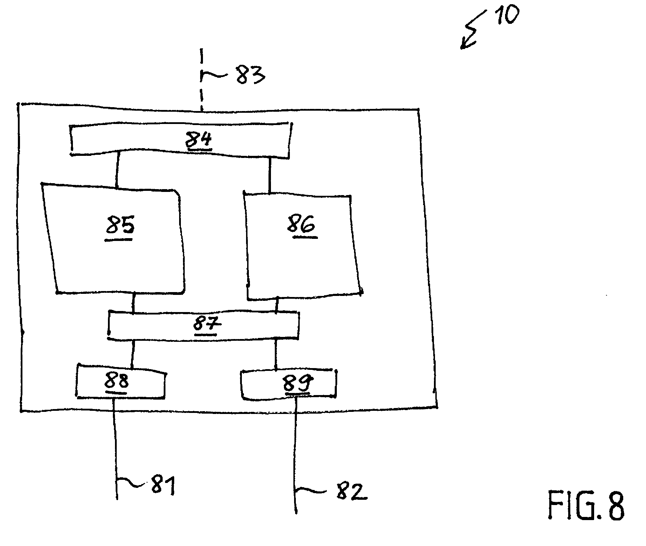

Fig. 8 illustrates an embodiment of a centralised server 10. The centralised server 10 comprises at least a first interface 81 for a TCP connection to a first customer edge device CE1 and a second interface 82 for a TCP connection to a second customer edge device CE2. The centralised server 10 may further comprise a third interface 83 to a network management system or a cloud computing management system. The centralised server 10 further comprises a global policies and decision logic 84, a data base 85 mapping Ethernet addresses to IP addresses of customer edge devices CE1, CE2, a data base 86 containing overlay topology and path characteristics, a server function unit 87, and a first and a second protocol engine 88, 89 for managing a protocol used for the control message exchange with the customer edge devices CE1, CE2 of the overlay network.

Fig. 8 shows the main and additional functions of the centralised server. The centralised server is on the one hand a centralized control and policy decision point, and, on the other hand, a mirroring server that distributes information from the individual customer edge devices in the overlay. The functions can be summarized as follows:
- Distribution of information between all customer edge devices, including Ethernet addresses and their mapping to sites, the scope of VLAN tags, joining of new sites, topology and path characteristics, etc.
- Centralized caching of the mapping of Ethernet and IP addresses of hosts in the LANs attached to the overlay and distribution of that information to ARP proxies in the CE devices.
- Centralized configuration of policies.
- Preferably an external interface to cloud management system.

## Claims

1. A method of transmitting Ethernet packets between two or more Ethernet LANs (LAN1, LAN2, LAN3) through an interconnecting IP network (N), each of the Ethernet LANs being connected to the interconnecting IP network (N) by means of one or more respective customer edge devices (CE1, CE2, CE3),
**characterised in**
**that** the method comprises the step of:
processing and controlling, by a centralised server (10) connected to a plurality of the customer edge devices (CE1, CE2, CE3) via control connections (21), wherein each customer edge device (CE1, CE2, CE3) maintains a control connection (21) of these control connections (21) to the centralised server, an exchange of control information associated with the Ethernet packet transmission between the customer edge devices (CE1, CE2, CE3) of the two or more Ethernet LANs (LAN1, LAN2, LAN3), wherein the control information exchanged between the customer edge device (CE1) of at least one of the Ethernet LANs (LAN1) and respective customer edge devices (CE 2, CE 3) of the at least one further Ethernet LAN (LAN2, LAN3) is sent to and received from the centralised server (10) through a control information interface.

2. The method according to claim 1,
**characterised in**
**that** the control information is related to one or more of: mapping of Ethernet addresses of network devices of Ethernet LANs to IP addresses of customer edge devices, host address resolution information corresponding to the Address Resolution Protocol, information concerning a scope of Ethernet LANs and/or VLAN tags, membership information of multicast groups inside the Ethernet LANs, filtering policies, firewall rules, overlay topology, information about path characteristics between customer edge devices, bootstrapping and configuration information for devices joining an overlay network comprising the two or more Ethernet LANs.

3. The method according to claim 1,
**characterised in**
**that** the method further comprises the steps of:
reporting, by one or more of the customer edge devices (CE1, CE2, CE3), control information to the centralised server (10);
managing, by the centralised server (10), the received control information and distributing processed control information to one or more of the customer edge devices (CE1, CE2, CE3) including a first customer edge device (CE1) associated with a first Ethernet LAN (LAN1) of the two or more Ethernet LANs (LAN1, LAN2, LAN3); and
using, by the first customer edge device (CE1), the received control information for controlling a transmission of Ethernet data traffic from a first network device (A) of the first Ethernet LAN (LAN1) through the interconnecting IP network (N) to a second network device (B) of a second Ethernet LAN (LAN2) of the two or more Ethernet LANs (LAN1, LAN2, LAN3).

4. The method according to claim 1,
**characterised in**
**that** the method further comprises the steps of:
sending, by a first network device (A) of a first Ethernet LAN (LAN1) of the two or more Ethernet LANs (LAN1, LAN2, LAN3), an Ethernet packet (20) destined for an Ethernet address of a second network device (B) of a second Ethernet LAN (LAN2) of the two or more Ethernet LANs (LAN1, LAN2, LAN3);
receiving, by a first customer edge device (CE1) associated with the first Ethernet LAN (LAN1), the Ethernet packet (20) and checking if a forwarding table (31) managed by the first customer edge device (CE1) contains a mapping of the Ethernet address of the second network device (B) to an IP address of a customer edge device (CE2) associated with the second Ethernet LAN (LAN2);
if the forwarding table (31) does not contain the said mapping, sending by the first customer edge device (CE1) an address resolution request to the centralised server (10) and receiving from the centralised server (10) in response to the address resolution request a reply message specifying the said mapping;
encapsulating, by the first customer edge device (CE1), the Ethernet packet (20) with an encapsulation header comprising a destination address of the second customer edge device (CE2) according to the mapping;
sending the encapsulated Ethernet packet (28) via the interconnecting IP network (N) to the second customer edge device (CE2); and
decapsulating, by the second customer edge device (CE2), the received encapsulated Ethernet packet (28) for delivery within the second Ethernet LAN (LAN2) to the second network device (B).

5. The method according to claim 1,
**characterised in**
**that** the method further comprises the steps of:
intercepting, by a first customer edge device (CE1) associated with a first Ethernet LAN (LAN1) of the two or more Ethernet LANs (LAN1, LAN2, LAN3), an address resolution request sent by a first network device (A) of the first Ethernet LAN (LAN1) and sending a corresponding lookup request from the first customer edge device (CE1) to the centralised server (10) if an address mapping associated with the address resolution request is not known;
after receipt of the lookup request, forwarding by the centralised server (10) the lookup request to all other customer edge devices (CE2, CE3) except the first customer edge device (CE1);
after receipt of the lookup request, distributing by the other customer edge devices (CE2, CE3), the lookup request among the network devices (B) of the respective Ethernet LANs (LAN2, LAN3);
receiving, by the other customer edge devices (CE2, CE3), lookup replies from the network devices (B) of the respective Ethernet LANs (LAN2, LAN3) and forwarding the lookup replies to the centralised server (10);
managing and processing the received lookup replies by the centralised server (10) and sending a lookup reply to the first customer edge device (CE1) which had initiated the lookup request; and
sending, by the first customer edge device (CE1), the lookup reply to the first network device (A) which had initiated the address resolution request.

6. The method according to claim 5,
**characterised in**
**that** the method further comprises the steps of:
announcing, by the centralised server (10), the lookup reply which is sent by the centralised server (10) to the first customer edge device (CE1) also to the other customer edge devices (CE2, CE3) for their learning of addresses from the centralised server (10).

7. The method according to claim 1,
**characterised in**
**that** the method further comprises the steps of:
measuring, by at least one of the customer edge devices (CE1, CE2, CE3), path characteristics and sending the measured path characteristics to the centralised server (10);
establishing, by the centralised server (10), topology characteristics regarding the communication between the two or more Ethernet LANs (LAN1, LAN2, LAN3) on the basis of the received path characteristics;
announcing, by the centralised server (10), the established topology characteristics to the customer edge devices (CE1, CE2, CE3); and
making use of this information in routing decisions by at least one of the customer edge devices (CE1, CE2, CE3).

8. The method according to claim 7,
**characterised in**
**that** the interconnecting IP network (N) connects at least three Ethernet LANs (LAN1, LAN2, LAN3), whereby the method further comprises the steps of:
on account of announced topology characteristics, routing an ongoing data traffic transmission between a first and a second Ethernet LAN of the at least three Ethernet LANs (LAN1, LAN2, LAN3) via a third customer edge device (CE3) of a third Ethernet LAN (LAN3) of the at least three Ethernet LANs (LAN1, LAN2, LAN3).

9. A centralised server (10) of an overlay network with two or more Ethernet LANs (LAN1, LAN2, LAN3) and an interconnecting IP network (N), the centralised server (10) comprising two or more interfaces (81, 82) for connecting the centralised server (10) via control connections (21) to respective customer edge devices (CE1, CE2, CE3), wherein each customer edge device (CE1, CE2, CE3) maintains a control connection (21) of these control connections (21) to the centralised server, each of the customer edge devices (CE1, CE2, CE3) connecting one or more associated Ethernet LANs (LAN1, LAN2, LAN3) to the interconnecting IP network (N),
**characterised in**
**that** the centralised server (10) is adapted, through a control information interface, to receive the control information, which is exchanged between the customer edge device (CE1) of at least one of the Ethernet LANs (LAN1) and respective customer edge devices (CE 2, CE 3) of the at least one further Ethernet LAN (LAN2, LAN3), from the customer edge device (CE1) of the at least one of the Ethernet LANs (LAN1) and send said control information to the respective customer edge devices (CE2, CE3) of the at least one further Ethernet LAN (LAN2, LAN3), the control information being associated with a transmission of Ethernet packets between two or more of the two or more Ethernet LANs (LAN1, LAN2, LAN3) through the interconnecting IP network (N).

10. The centralised server (10) according to claim 9,
**characterised in**
**that** the centralised server (10) further comprises a data base (85) containing at least one mapping of an Ethernet address of a network device of one of the Ethernet LANs (LAN1, LAN2, LAN3) to an IP address of a customer edge device of the respective Ethernet LAN (LAN2) with which the network device is associated.

11. The centralised server (10) according to claim 10,
**characterised in**
**that** the data base (85) in the centralized server (10) further contains at least one address mapping of an Ethernet address of a network device of one of the Ethernet LANs (LAN1, LAN2, LAN3) to its corresponding IP address, so that the centralized server can answer Ethernet address lookup queries without Address Resolution Protocol broadcasts.

12. The centralised server (10) according to claim 9,
**characterised in**
**that** the centralised server (10) further comprises an interface (83) to a network or cloud computing management system.

13. A system comprising customer edge devices (CE1, CE2, CE3) and a centralized server (10), wherein a customer edge device (CE1) associated with one or more Ethernet LANs (LAN 1), the customer edge device (CE1) comprising at least one Ethernet interface to the Ethernet LAN (LAN 1), at least one data traffic interface to an interconnecting IP network (N) interconnecting the Ethernet LAN (LAN 1) with at least one further Ethernet LAN (LAN2, LAN3) for a transmission of Ethernet packets between the Ethernet LAN (LAN 1) and the at least one further Ethernet LAN (LAN2, LAN3) via the interconnecting IP network (N), and a control information interface to the centralised server (10) for exchange of control information associated with the Ethernet packet transmission via a control connection (21) out of a plurality of control connections (21), wherein the control information is sent to and received from the centralised server (10) through the control information interface via the control connection (21) out of the plurality of control connections (21), wherein each customer edge device (CE1, CE2, CE3) maintains a control connection (21) of these control connections (21) to the centralised server,
**characterised in**
**that** the said exchange of control information is between the customer edge device (CE1) and respective customer edge devices (CE2, CE3) of the at least one further Ethernet LAN (LAN2, LAN3), wherein the control information exchanged between the customer edge device (CE1) of at least one of the Ethernet LANs (LAN1) and respective customer edge devices (CE 2, CE 3) of the at least one further Ethernet LAN (LAN2, LAN3) is sent to and received from the centralised server (10) through the control information interface.

14. The system according to claim 13,
**characterised in**
**that** the customer edge device (CE1) further comprises a forwarding table (31) containing at least one mapping of an Ethernet address of a network device of one of the at least one further Ethernet LAN (LAN2, LAN3) to an IP address of the respective customer edge device (CE2, CE3) of the at least one further Ethernet LAN (LAN2, LAN3) with which the network device is associated.

15. The system according to claim 13,
**characterised in**
**that** the customer edge device (CE1) further comprises a path metering unit (26) adapted to measure path characteristics and that the customer edge device (CE1) is adapted to send the measured path characteristics to the centralised server (10).

16. The system according to claim 13,
**characterised in**
**that** the customer edge device (CE1) further comprises an address resolution proxy (25) adapted to intercept an Address Resolution Protocol request sent by a network device (A) of the Ethernet LAN (LAN1) and send a corresponding lookup request to the centralised server (10) if it does not know the address mapping of IP and Ethernet addresses of a destination network device (B) addressed in the Address Resolution Protocol request, and send a reply to the network device (A) once the address mapping is retrieved from the server (10).

17. The system according to claim 16,
**characterised in**
**that** the address resolution proxy (25) learns address mappings of the IP and Ethernet addresses of the destination network device (B) from the centralised server (10) and directly replies to the intercepted Address Resolution Protocol request from the network device (A) if the address mapping is already known from its ARP table.

## Patentansprüche

1. Verfahren für die Übertragung von Ethernetpaketen zwischen zwei oder mehr Ethernet-LANs (LAN1, LAN2, LAN3) über ein verbindendes IP-Netzwerk (N), wobei jedes der Ethernet-LANs mittels einer oder mehrerer jeweiliger Kunden-Edge-Vorrichtungen (CE1, CE2, CE3) mit dem verbindenden IP-Netzwerk (N) verbunden ist,
**dadurch gekennzeichnet,**
**dass** das Verfahren den folgenden Schritt umfasst:
über einen zentralen Server (10), der über Steuerungsverbindungen (21) mit einer Vielzahl von Kunden-Edge-Vorrichtungen (CE1, CE2, CE3) verbunden ist, wobei jede Kunden-Edge-Vorrichtung (CE1, CE2, CE3) eine Steuerungsverbindung (21) besagter Steuerungsverbindungen (21) zu dem zentralen Server unterhält, das Verarbeiten und Steuern eines Austauschs von der Ethernetpaket-Übertragung zwischen der Kunden-Edge-Vorrichtung (CE1, CE2, CE3) und den zwei oder mehr Ethernet-LANs (LAN1, LAN2, LAN3) zugeordneten Steuerdaten, wobei die zwischen der Kunden-Edge-Vorrichtungen (CE1) des mindestens einen Ethernet-LANs (LAN1) und den jeweiligen Kunden-Edge-Vorrichtungen (CE2, CE3) des mindestens einen weiteren Ethernet-LANs (LAN2, LAN3) ausgetauschten Steuerdaten über eine Steuerdatenschnittstelle an den zentralen Server (10) gesendet und von diesem empfangen werden.

2. Verfahren nach Anspruch 1,
**dadurch gekennzeichnet,**
**dass** die Steuerdaten sich auf einen oder mehrere der folgenden Aspekte beziehen: auf das Mappen von Ethernetadressen von Netzwerkgeräten von Ethernet-LANs zu IP-Adressen von Kunden-Edge-Vorrichtungen, auf dem Adressauflösungsprotokoll zugeordnete Host-Adressenauflösungsinformationen zu einem Bereich von Ethernet-LANs oder VLAN-Tags, auf Mitgliedschaftsinformationen zu Multicastgruppen innerhalb der Ethernet-LANs, auf Filter-Richtlinien, Firewall-Regeln, Overlaytopologie, Informationen zu Pfadeigenschaften zwischen Kunden-Edge-Vorrichtungen, Bootstrapping und auf Konfigurationsinformationen für Geräte, die sich in einem Overlay-Netzwerk (N) anmelden, welches die zwei oder mehr Ethernet-LANs umfasst.

3. Verfahren nach Anspruch 1,
**dadurch gekennzeichnet,**
**dass** das Verfahren weiterhin die folgenden Schritte umfasst:
Berichten von Steuerdaten an den zentralen Server (10) durch ein oder mehrere Kunden-Edge-Vorrichtungen (CE1, CE2, CE3);
Verwalten, durch den zentralen Server (10), der empfangenen Steuerdaten und Verteilen der verarbeiteten Steuerdaten an ein oder mehrere Kunden-Edge-Vorrichtungen (CE1, CE2, CE3), darunter eine erste Kunden-Edge-Vorrichtung (CE1), die einem ersten Ethernet-LANs (LAN1) der zwei oder mehr Ethernet-LANs (LAN1, LAN2, LAN3) zugeordnet ist; und
Verwenden, durch die erste Kunden-Edge-Vorrichtung (CE1), der empfangenen Steuerdaten für die Steuerung einer Übertragung von Ethernetdatenverkehr von einer ersten Netzwerkvorrichtung (A) des ersten Ethernet-LANs (LAN1) über das verbindende IP-Netzwerk (N) an eine zweite Netzwerkvorrichtung (B) eines zweiten Ethernet-LANs (LAN2) von zwei oder mehr Ethernet-LANs (LAN1, LAN2, LAN3).

4. Verfahren nach Anspruch 1,
**dadurch gekennzeichnet,**
**dass** das Verfahren weiterhin die folgenden Schritte umfasst:
Senden, durch eine erste Netzwerkvorrichtung (A) eines ersten Ethernet-LANs (LAN1) der zwei oder mehr Ethernet-LANs (LAN1, LAN2, LAN3), eines Ethernet-Pakets (20), das gerichtet ist an eine Ethernetadresse einer zweiten Netzwerkvorrichtung (B) eines zweiten Ethernet-LANs (LAN2) der zwei oder mehr Ethernet-LANs (LAN1, LAN2, LAN3);
Empfangen des Ethernet-Pakets (20) durch eine erste Kunden-Edge-Vorrichtung (CE1), die dem ersten Ethernet-LAN (LAN1) zugeordnet ist, und das Prüfen, ob eine von der ersten Kunden-Edge-Vorrichtung (CE1) verwaltete Weiterleitungstabelle (31) ein Mapping der Ethernetadressen der zweiten Netzwerkvorrichtung (B) zu einer IP-Adresse einer Kunden-Edge-Vorrichtung (CE2) enthält, die dem zweiten Ethernet-LAN (LAN2) zugeordnet ist;
falls die Weiterleitungstabelle (31) das besagte Mapping nicht enthält, das Senden einer Adressenauflösungsanfrage durch die erste Kunden-Edge-Vorrichtung (CE1) an den zentraler Server (10) und in Reaktion auf die Adressenauflösungsanfrage das Empfangen einer Antwortmitteilung von dem zentralen Server (10), welche besagtes Mapping spezifiziert;
das durch die erste Kunden-Edge-Vorrichtung (CE1) erfolgende Einkapseln des Ethernet-Pakets (20) mit einem Einkapselungs-Header, der gemäß dem Mapping eine Zieladresse der zweiten Kunden-Edge-Vorrichtung (CE2) umfasst;
das Senden des eingekapselten Ethernet-Pakets (28) über das verbindende IP-Netzwerk (N) an die zweite Kunden-Edge-Vorrichtung (CE2); und
das durch die zweite Kunden-Edge-Vorrichtung (CE2) erfolgende Entkapseln des empfangenen, eingekapselten Ethernet-Pakets (28) zwecks Übermittlung an die zweite Netzwerkvorrichtung (B) innerhalb des zweiten Ethernet-LANs (LAN2).

5. Verfahren nach Anspruch 1,
**dadurch gekennzeichnet,**
**dass** das Verfahren weiterhin die folgenden Schritte umfasst:
Abfangen einer durch eine erste Netzwerkvorrichtung (A) eines ersten Ethernet-LANs (LAN1) gesendeten Adressenauflösungsanfrage durch eine ersten Kunden-Edge-Vorrichtung (CE1), die assoziiert ist mit dem ersten Ethernet-LAN (LAN1) der zwei oder mehr Ethernet-LANs (LAN1, LAN2, LAN3), und das Senden einer entsprechenden Lookup-Anfrage von der ersten Kunden-Edge-Vorrichtung (CE1) an den zentralen Server (10), wen kein Adressmapping bekannt ist, das mit der Adressenauflösungsanfrage assoziiert ist;
nach dem Empfang der Lookup-Anfrage das Weiterleiten der Lookup-Anfrage durch den zentralen Server (10) an alle weiteren Kunden-Edge-Vorrichtungen (CE2, CE3) außer der ersten Kunden-Edge-Vorrichtung (CE1);
nach dem Empfang der Lookup-Anfrage das Verteilen der Lookup-Anfrage durch die weiteren Kunden-Edge-Vorrichtungen (CE2, CE3) an die Netzwerkvorrichtungen (B) der jeweiligen Ethernet-LANs (LAN2, LAN3);
das Empfangen von Lookup-Antworten der Netzwerkvorrichtungen (B) der jeweiligen Ethernet-LANs (LAN2, LAN3) durch die weiteren Kunden-Edge-Vorrichtungen (CE2, CE3) und das Weiterleiten der Lookup-Antworten an den zentralen Server (10);
Verwalten und Verarbeitender empfangenen Lookup-Antworten durch den zentralen Server (10) und das Senden einer Lookup-Antwort an die erste Kunden-Edge-Vorrichtung (CE1), welche die Lookup-Anfrage eingeleitet hatte; und
das Senden der Lookup-Antwort an die erste Netzwerkvorrichtung (A), welche die Adressenauflösungsanfrage ausgelöst hatte, durch die Kunden-Edge-Vorrichtung (CE1).

6. Verfahren nach Anspruch 5,
**dadurch gekennzeichnet,**
**dass** das Verfahren weiterhin die folgenden Schritte umfasst:
das durch den zentralen Server (10) erfolgende Melden der Lookup-Antwort, die vom zentralen Server (10) an die erste Kunden-Edge-Vorrichtung (CE1) gesendet wird, zudem an die weiteren Kunden-Edge-Vorrichtungen (CE2, CE3), damit diese Adressen des zentralen Servers (10) lernen.

7. Verfahren nach Anspruch 1,
**dadurch gekennzeichnet,**
**dass** das Verfahren weiterhin die folgenden Schritte umfasst:
Messen von Pfadeigenschaften durch mindestens eine der Kunden-Edge-Vorrichtungen (CE1, CE2, CE3) und das Senden der gemessenen Pfadeigenschaften an den zentralen Server (10);
das durch den zentralen Server (10) erfolgende Einrichten von Topologieeigenschaften hinsichtlich der Kommunikation zwischen den zwei oder
mehr Ethernet-LANs (LAN1, LAN2, LAN3) auf der Grundlage der empfangenen Pfadeigenschaften; das Melden der eingerichteten Topologieeigenschaften durch den zentraler Server (10) an die Kunden-Edge-Vorrichtungen (CE1, CE2, CE3);
und die Benutzung dieser Informationen für Routingentscheidungen durch mindestens eine der Kunden-Edge-Vorrichtungen (CE1, CE2, CE3).

8. Verfahren nach Anspruch 7,
**dadurch gekennzeichnet,**
**dass** das verbindende IP-Netzwerk (N) mindestens drei Ethernet-LANs (LAN1, LAN2, LAN3) miteinander verbindet, wobei das Verfahren weiterhin folgenden Schritt umfasst: auf der Grundlage der gemeldeten Topologieeigenschaften das Routen und die fortgesetzte Datenübertragung zwischen einem ersten und einem zweiten Ethernet-LAN der mindestens drei Ethernet-LANs (LAN1, LAN2, LAN3) über eine dritte Kunden-Edge-Vorrichtung (CE3) eines dritten Ethernet-LANs (LAN3) der mindestens drei Ethernet-LANs (LAN1, LAN2, LAN3).

9. Zentraler Server (10) eines Overlay-Netzwerks mit zwei oder mehr Ethernet-LANs (LAN1, LAN2, LAN3) und einem verbindenden IP-Netzwerk (N), wobei der zentrale Server (10) zwei oder mehr Schnittstellen (81, 82) für das Verbinden des zentralen Servers (10) über Steuerungsverbindungen (21) mit den jeweiligen Kunden-Edge-Vorrichtungen (CE1, CE2, CE3) umfasst, wobei jede Kunden-Edge-Vorrichtung (CE1, CE2, CE3) eine Steuerungsverbindung (21) besagter Steuerungsverbindungen (21) zum zentralen Server unterhält, wobei jede der Kunden-Edge-Vorrichtungen (CE1, CE2, CE3) ein oder mehrere assoziierte Ethernet-LANs (LAN1, LAN2, LAN3) mit dem verbindenden IP-Netzwerk (N) verbindet,
**dadurch gekennzeichnet,**
**dass** der zentrale Server (10) dafür ausgelegt ist, um über eine Steuerdatenschnittstelle von der Kunden-Edge-Vorrichtung (CE1) des mindestens einen der Ethernet-LANs (LAN1) Steuerdaten zu empfangen, die ausgetauscht werden zwischen der Kunden-Edge-Vorrichtung (CE1) von mindestens einem der Ethernet-LANs (LAN1) und den jeweiligen Kunden-Edge-Vorrichtungen (CE2, CE3) von mindestens einem weiteren Ethernet-LAN (LAN2, LAN3), sowie dafür besagte Steuerdaten an die jeweiligen Kunden-Edge-Vorrichtungen (CE2, CE3) des mindestens einen weiteren Ethernet-LANs (LAN2, LAN3) zu senden, wobei die Steuerdaten mit der Übertragung von Ethernet-Paketen zwischen zwei oder mehreren der zwei oder mehr Ethernet-LANs (LAN1, LAN2, LAN3) über das verbindende IP-Netzwerk (N) assoziiert werden.

10. Zentraler Server (10) nach Anspruch 9,
**dadurch gekennzeichnet,**
**dass** der zentrale Server (10) weiterhin eine Datenbank (85) umfasst, die mindestens ein Mapping von Ethernetadressen einer Netzwerkvorrichtung eines der Ethernet-LANs (LAN1, LAN2, LAN3) zu einer IP-Adresse einer Kunden-Edge-Vorrichtung des jeweiligen Ethernet-LANs (LAN2) enthält, mit welchem die Netzwerkvorrichtung assoziiert ist.

11. Zentraler Server (10) nach Anspruch 10,
**dadurch gekennzeichnet,**
die Datenbank (85) im zentralen Server (10) weiterhin mindestens ein Adressmapping einer Ethernetadresse einer Netzwerkvorrichtung eines der Ethernet-LANs (LAN1, LAN2, LAN3) zu ihrer entsprechenden IP-Adresse enthält, dergestalt, dass der zentrale Server auf die Lookup-Anfragen nach Ethernetadressen ohne das Senden von Verbindungsadressenauflösungsprotokollen antworten kann.

12. Zentraler Server (10) nach Anspruch 9,
**dadurch gekennzeichnet,**
**dass** der zentrale Server (10) weiterhin eine Schnittstelle (83) zu einem Netzwerk oder einem Cloud-Computing-Managementsystem umfasst.

13. Kunden-Edge-Vorrichtungen (CE1, CE2, CE3) umfassendes System und ein zentraler Server (10), wobei eine Kunden-Edge-Vorrichtung (CE1) mit einer oder mehreren Ethernet-LANs (LAN1) assoziiert ist, wobei die Kunden-Edge-Vorrichtung (CE1) mindestens eine Ethernetschnittstelle zu dem Ethernet-LAN (LAN1) und mindestens eine Datenverkehrschnittstelle zu einem verbindenden IP-Netzwerk (N) umfasst, welches das Ethernet-LAN (LAN1) mit mindestens einem weiteren Ethernet-LAN (LAN2, LAN3) zwecks Übertragung von Ethernetpaketen zwischen dem Ethernet-LAN (LAN1) und dem mindestens einen weiteren Ethernet-LAN (LAN2, LAN3) über das verbindende IP-Netzwerk (N) verbindet, und eine Steuerdatenschnittstelle zum zentralen Server (10) zwecks Austauschs von Steuerdaten, die über eine Steuerverbindung (21) aus der Vielzahl von Steuerverbindungen (21) mit der Ethernet-Paket-Übertragung assoziiert ist, wobei die Steuerdaten über die Steuerdatenschnittstelle durch die Steuerungsverbindung (21) aus der Vielzahl von Steuerungsverbindungen (21) an den zentralen Server (10) gesendet und von diesem empfangen werden, wobei jede Kunden-Edge-Vorrichtung (CE1, CE2, CE3) eine Steuerungsverbindung (21) aus dieser Vielzahl von Steuerungsverbindungen (21) zum zentralen Server (10) unterhält.
**dadurch gekennzeichnet,**
**dass** besagter Austausch von Steuerdaten zwischen der Kunden-Edge-Vorrichtung (CE1) und den jeweiligen Kunden-Edge-Vorrichtungen (CE2, CE3) mindestens eines weiteren Ethernet-LANs (LAN2, LAN3) erfolgt, wobei die zwischen der Kunden-Edge-Vorrichtung (CE1) von mindestens einem der Ethernet-LANs (LAN1) und den jeweiligen Kunden-Edge-Vorrichtungen (CE2, CE3) des mindestens einen weiteren Ethernet-LANs (LAN2, LAN3) ausgetauschten Steuerdaten über die Steuerdatenschnittstelle an den zentralen Server (10) gesendet und von diesem empfangen werden.

14. System nach Anspruch 13,
**dadurch gekennzeichnet,**
**dass** die Kunden-Edge-Vorrichtung (CE1) weiterhin eine Weiterleitungstabelle (31) umfasst, die mindestens ein Mapping von Ethernetadressen einer Netzwerkvorrichtung eines der mindestens einen weiteren Ethernet-LANs (LAN2, LAN3) zu einer IP-Adresse einer Kunden-Edge-Vorrichtung der jeweiligen Kunden-Edge-Vorrichtung (CE2, CE3) von mindestens einem weiteren Ethernet-LAN (LAN2, LAN3) enthält, mit welchem die Netzwerkvorrichtung assoziiert ist.

15. System nach Anspruch 13,
**dadurch gekennzeichnet,**
**dass** die Kunden-Edge-Vorrichtung (CE1) weiterhin eine Pfadmesseinheit (26) umfasst, die ausgelegt ist für das Messen von Pfadeigenschaften, sowie dadurch, dass die Kunden-Edge-Vorrichtung (CE1) dafür ausgelegt ist, die gemessenen Pfadeigenschaften an den zentrale Server (10) zu senden.

16. System nach Anspruch 13,
**dadurch gekennzeichnet,**
**dass** die Kunden-Edge-Vorrichtung (CE1) weiterhin einen Adressauflösungsproxy (25) umfasst, die ausgelegt ist für das Abfangen einer Adressauflösungsprotokoll-Anfrage, die gesendet wurde von einer Netzwerkvorrichtung (A) des Ethernet-LANs (LAN1), sowie für das Senden einer entsprechenden Lookup-Anfrage an den zentralen Server (10), wenn er das Adressmapping von IP- und Ethernetadressen einer Zielnetzwerksvorrichtung (B) nicht kennt, die in der Adressenauflösungsprotokoll-Anfrage angesteuert wird, und für das Senden einer Antwort an die Netzwerkvorrichtung (A), sobald das Adressmapping vom Server (10) abgerufen wurde.

17. System nach Anspruch 16,
**dadurch gekennzeichnet,**
**dass** die Adressauflösungsproxy (25) vom zentralen Server (10) Adressmappings von den IP- und Ethernetadressen der Zielnetzwerksvorrichtung (B) lernt und direkt auf die abgefangenen Adressenauflösungsprotokoll-Anfragen von der Netzwerkvorrichtung (A) antwortet, wenn sie das Adressmapping bereits aus ihrer ARP-Tabelle kennt.

## Revendications

1. Procédé de transmission de paquets Ethernet entre deux réseaux locaux Ethernet ou plus (LAN1, LAN2, LAN3) au travers d'un réseau IP d'interconnexion (N), chacun des réseaux locaux Ethernet étant connecté au réseau IP d'interconnexion (N) au moyen d'un ou de plusieurs périphériques d'extrémité client (CE1, CE2, CE3) respectifs,
**caractérisé en ce**
**que** le procédé comprend les étapes suivantes :
traiter et commander, par un serveur centralisé (10) connecté à une pluralité des périphériques d'extrémité client (CE1, CE2, CE3) par l'intermédiaire de connexions de commande (21), chaque périphérique d'extrémité client (CE1, CE2, CE3) maintenant une connexion de commande (21) de ces connexions de commande (21) vers le serveur centralisé, un échange d'informations de commande associées à la transmission de paquets Ethernet entre les périphériques d'extrémité client (CE1, CE2, CE3) des deux réseaux locaux Ethernet ou plus (LAN1, LAN2, LAN3), les informations de commande échangées entre le périphérique d'extrémité client (CE1) d'au moins l'un des réseaux locaux Ethernet (LAN1) et les périphériques d'extrémité client (CE2, CE3) respectifs de l'au moins un réseau local Ethernet (LAN2, LAN3) supplémentaire étant envoyées vers et reçues par le serveur centralisé (10) au travers d'une interface d'informations de commande.

2. Procédé selon la revendication 1,
**caractérisé en ce**
**que** les informations de commande concernent un ou plusieurs des éléments suivants : mise en correspondance des adresses Ethernet des périphériques de réseau des réseaux locaux Ethernet avec les adresses IP des périphériques d'extrémité client, informations de résolution d'adresse de rattachement correspondant au protocole de résolution d'adresse, informations concernant un domaine d'application des réseaux locaux Ethernet et/ou des balises VLAN, informations d'appartenance de groupes de multidiffusion à l'intérieur des réseaux locaux Ethernet, politiques de filtrage, règles de pare-feu, topologie de superposition, informations à propos des caractéristiques de chemin entre les périphériques d'extrémité client, informations d'amorçage et de configuration pour les périphériques rejoignant un réseau superposé comprenant les deux réseaux locaux Ethernet ou plus.

3. Procédé selon la revendication 1,
**caractérisé en ce**
**que** le procédé comprend en outre les étapes suivantes :
signaler, par un ou plusieurs des périphériques d'extrémité client (CE1, CE2, CE3), des informations de commande au serveur centralisé (10) ;
gérer, par le serveur centralisé (10), les informations de commande reçues et distribuer les informations de commande traitées à un ou plusieurs des périphériques d'extrémité client (CE1, CE2, CE3), y compris un premier périphérique d'extrémité client (CE1) associé à un premier réseau local Ethernet (LAN1) des deux réseaux locaux Ethernet ou plus (LAN1, LAN2, LAN3) ; et
utiliser, par le premier périphérique d'extrémité client (CE1), les informations de commande reçues pour commander une transmission de trafic de données Ethernet d'un premier périphérique de réseau (A) du premier réseau local Ethernet (LAN1) au travers du réseau IP d'interconnexion (N) vers un deuxième périphérique de réseau (B) d'un deuxième réseau local Ethernet (LAN2) des deux réseaux locaux Ethernet ou plus (LAN1, LAN2, LAN3).

4. Procédé selon la revendication 1,
**caractérisé en ce**
**que** le procédé comprend en outre les étapes suivantes :
envoyer, par un premier périphérique de réseau (A) d'un premier réseau local Ethernet (LAN1) des deux réseaux locaux Ethernet ou plus (LAN1, LAN2, LAN3), un paquet Ethernet (20) destiné à une adresse Ethernet d'un deuxième périphérique de réseau (B) d'un deuxième réseau local Ethernet (LAN2) des deux réseaux locaux Ethernet ou plus (LAN1, LAN2, LAN3) ;
recevoir, par un premier périphérique d'extrémité client (CE1) associé au premier réseau local Ethernet (LAN1), le paquet Ethernet (20) et contrôler si une table de retransmission (31) gérée par le premier périphérique d'extrémité client (CE1) contient une mise en correspondance de l'adresse Ethernet d'un deuxième périphérique de réseau (B) avec une adresse IP d'un périphérique d'extrémité client (CE2) associé au deuxième réseau local Ethernet (LAN2) ;
si la table de retransmission (31) ne contient pas ladite mise en correspondance, envoyer par le premier périphérique d'extrémité client (CE1) une demande de résolution d'adresse au serveur centralisé (10) et recevoir de la part du serveur centralisé (10), en réponse à la demande de résolution d'adresse, un message de réponse spécifiant ladite mise en correspondance ;
encapsuler, par le premier périphérique d'extrémité client (CE1), le paquet Ethernet (20) avec un en-tête d'encapsulation comprenant une adresse destinataire du deuxième périphérique d'extrémité client (CE2) conformément à la mise en correspondance ;
envoyer le paquet Ethernet encapsulé (28) au deuxième périphérique d'extrémité client (CE2) par l'intermédiaire du réseau IP d'interconnexion (N) ; et désencapsuler, par le deuxième périphérique d'extrémité client (CE2), le paquet Ethernet encapsulé (28) reçu en vue de sa remise au deuxième périphérique de réseau (B) au sein du deuxième réseau local Ethernet (LAN2).

5. Procédé selon la revendication 1,
**caractérisé en ce**
**que** le procédé comprend en outre les étapes suivantes :
intercepter, par un premier périphérique d'extrémité client (CE1) associé à un premier réseau local Ethernet (LAN1) des deux réseaux locaux Ethernet ou plus (LAN1, LAN2, LAN3), une demande de résolution d'adresse envoyée par un premier périphérique de réseau (A) du premier réseau local Ethernet (LAN1) et envoyer une demande de recherche correspondante du premier périphérique d'extrémité client (CE1) au serveur centralisé (10) si une mise en correspondance d'adresse associée à la demande de résolution d'adresse est inconnue ;
après réception de la demande de recherche, retransmettre par le serveur centralisé (10) la demande de recherche à tous les périphériques d'extrémité client (CE2, CE3), à l'exception du premier périphérique d'extrémité client (CE1) ;
après réception de la demande de recherche, distribuer par les autres périphériques d'extrémité client (CE2, CE3) la demande de recherche parmi les périphériques de réseau (B) des réseaux locaux Ethernet (LAN2, LAN3) respectifs ;
recevoir, par les autres périphériques d'extrémité client (CE2, CE3), les réponses de recherche de la part des périphériques de réseau (B) des réseaux locaux Ethernet (LAN2, LAN3) respectifs et retransmettre les réponses de recherche au serveur centralisé (10) ;
gérer et traiter les réponses de recherche reçues par le serveur centralisé (10) et envoyer une réponse de recherche au premier périphérique d'extrémité client (CE1) qui a initié la demande de recherche ; et
envoyer, par le premier périphérique d'extrémité client (CE1), la réponse de recherche au premier périphérique de réseau (A) qui a initié la demande de résolution d'adresse.

6. Procédé selon la revendication 5,
**caractérisé en ce**
**que** le procédé comprend en outre les étapes suivantes :
annoncer, par le serveur centralisé (10), la réponse de recherche qui est envoyée par le serveur centralisé (10) au premier périphérique d'extrémité client (CE1) également aux autres périphériques d'extrémité client (CE2, CE3) en vue de leur apprentissage des adresses auprès du serveur centralisé (10).

7. Procédé selon la revendication 1,
**caractérisé en ce**
**que** le procédé comprend en outre les étapes suivantes :
mesurer, par au moins l'un des périphériques d'extrémité client (CE1, CE2, CE3), les caractéristiques de chemin et envoyer les caractéristiques de chemin mesurées au serveur centralisé (10) ;
établir, par le serveur centralisé (10), les caractéristiques de topologie concernant la communication entre les deux réseaux locaux Ethernet ou plus (LAN1, LAN2, LAN3) en se basant sur les caractéristiques de chemin reçues ;
annoncer, par le serveur centralisé (10), les caractéristiques de topologie établies aux périphériques d'extrémité client (CE1, CE2, CE3) ; et
utiliser ces informations dans les décisions de routage par au moins l'un des périphériques d'extrémité client (CE1, CE2, CE3).

8. Procédé selon la revendication 7,
**caractérisé en ce**
**que** le réseau IP d'interconnexion (N) connecte au moins trois réseaux locaux Ethernet (LAN1, LAN2, LAN3), le procédé comprenant en outre les étapes suivantes :
au titre des caractéristiques de topologie annoncées, router une transmission de trafic de données en cours entre un premier et un deuxième réseau local Ethernet parmi les au moins trois réseaux locaux Ethernet (LAN1, LAN2, LAN3) par l'intermédiaire d'un troisième périphérique d'extrémité client (CE3) d'un troisième réseau local Ethernet (LAN3) parmi les au moins trois réseaux locaux Ethernet (LAN1, LAN2, LAN3).

9. Serveur centralisé (10) d'un réseau superposé comprenant deux réseaux locaux Ethernet ou plus (LAN1, LAN2, LAN3) et un réseau IP d'interconnexion (N), le serveur centralisé (10) comprenant deux interfaces ou plus (81, 82) pour connecter le serveur centralisé (10) à des périphériques d'extrémité client (CE1, CE2, CE3) respectifs par l'intermédiaire de connexions de commande (21), chaque périphérique d'extrémité client (CE1, CE2, CE3) maintenant une connexion de commande (21) de ces connexions de commande (21) vers le serveur centralisé, chaque périphérique d'extrémité client (CE1, CE2, CE3) connectant un ou plusieurs réseaux locaux Ethernet (LAN1, LAN2, LAN3) associés au réseau IP d'interconnexion (N),
**caractérisé en ce**
**que** le serveur centralisé (10) est adapté pour, au travers d'une interface d'informations de commande, recevoir les informations de commande qui sont échangées entre le périphérique d'extrémité client (CE1) d'au moins l'un des réseaux locaux Ethernet (LAN1) et les périphériques d'extrémité client (CE2, CE3) respectifs de l'au moins un réseau local Ethernet (LAN2, LAN3) supplémentaire, de la part du périphérique d'extrémité client (CE1) d'au moins l'un des réseaux locaux Ethernet (LAN1) et envoyer lesdites informations de commande aux périphériques d'extrémité client (CE2, CE3) respectifs de l'au moins un réseau local Ethernet (LAN2, LAN3) supplémentaire, les informations de commande étant associées à la transmission de paquets Ethernet entre deux ou plus des deux réseaux locaux Ethernet ou plus (LAN1, LAN2, LAN3) au travers du réseau IP d'interconnexion (N).

10. Serveur centralisé (10) selon la revendication 9,
**caractérisé en ce**
**que** le serveur centralisé (10) comprend en outre une base de données (85) contenant au moins une mise en correspondance d'une adresse Ethernet d'un périphérique de réseau de l'un des réseaux locaux Ethernet (LAN1, LAN2, LAN3) à une adresse IP d'un périphérique d'extrémité client du réseau local Ethernet (LAN2) respectif auquel est associé le périphérique de réseau.

11. Serveur centralisé (10) selon la revendication 10,
**caractérisé en ce**
**que** la base de données (85) dans le serveur centralisé (10) contient en outre au moins une mise en correspondance d'adresse d'une adresse Ethernet d'un périphérique de réseau de l'un des réseaux locaux Ethernet (LAN1, LAN2, LAN3) à son adresse IP correspondante, de sorte que le serveur centralisé peut répondre aux requêtes de recherche d'adresse Ethernet sans diffusions par protocole de résolution d'adresse.

12. Serveur centralisé (10) selon la revendication 9,
**caractérisé en ce**
**que** le serveur centralisé (10) comprend en outre une interface (83) vers un réseau ou un système de gestion infonuagique.

13. Système comprenant des périphériques d'extrémité client (CE1, CE2, CE3) et un serveur centralisé (10), un périphérique d'extrémité client (CE1) associé à un ou plusieurs réseaux locaux Ethernet (LAN1), le périphérique d'extrémité client (CE1) comprenant au moins une interface Ethernet vers le réseau local Ethernet (LAN1), au moins une interface de trafic de données vers un réseau d'interconnexion (N) qui interconnecte le réseau local Ethernet (LAN1) avec au moins un réseau local Ethernet (LAN2, LAN3) supplémentaire pour une transmission de paquets Ethernet entre le réseau local Ethernet (LAN1) et l'au moins un réseau local Ethernet (LAN2, LAN3) supplémentaire par l'intermédiaire du réseau d'interconnexion (N), et une interface d'informations de commande vers le serveur centralisé (10) pour échanger des informations de commande associées à la transmission de paquets Ethernet par l'intermédiaire d'une connexion de commande (21) parmi une pluralité de connexions de commande (21), les informations de commande étant envoyées vers et reçues par le serveur centralisé (10) au travers de l'interface d'informations de commande par l'intermédiaire de la connexion de commande (21) parmi une pluralité de connexions de commande (21), chaque périphérique d'extrémité client (CE1, CE2, CE3) maintenant une connexion de commande (21) de ces connexions de commande (21) vers le serveur centralisé,
**caractérisé en ce**
**que** ledit échange d'informations de commande se déroule le périphérique d'extrémité client (CE1) et les périphériques d'extrémité client (CE2, CE3) respectifs de l'au moins un réseau local Ethernet (LAN2, LAN3) supplémentaire, les informations de commande échangées entre le périphérique d'extrémité client (CE1) d'au moins l'un des réseaux locaux Ethernet (LAN1) et les périphériques d'extrémité client (CE2, CE3) respectifs de l'au moins un réseau local Ethernet (LAN2, LAN3) supplémentaire étant envoyées vers et reçues par le serveur centralisé (10) au travers de l'interface d'informations de commande.

14. Système selon la revendication 13,
**caractérisé en ce**
**que** le périphérique d'extrémité client (CE1) comprend en outre une table de retransmission (31) contient au moins une mise en correspondance de l'adresse Ethernet d'un périphérique de réseau de l'un parmi l'au moins un réseau local Ethernet (LAN2, LAN3) avec une adresse IP du périphérique d'extrémité client (CE2, CE3) respectif de l'au moins un réseau local Ethernet (LAN2, LAN3) supplémentaire auquel est associé le périphérique de réseau.

15. Système selon la revendication 13,
**caractérisé en ce**
**que** le périphérique d'extrémité client (CE1) comprend en outre une unité de mesure de chemin (26) adaptée pour mesurer les caractéristiques de chemin et en ce que le périphérique d'extrémité client (CE1) est adapté pour envoyer les caractéristiques de chemin mesurées au serveur centralisé (10).

16. Système selon la revendication 13,
**caractérisé en ce**
**que** le périphérique d'extrémité client (CE1) comprend en outre un proxy de résolution d'adresse (25) adapté pour intercepter une demande de protocole de résolution d'adresse envoyée par un périphérique de réseau (A) du réseau local Ethernet (LAN1) et pour envoyer une demande de recherche correspondance au serveur centralisé (10) s'il ne connaît pas la mise en correspondance d'adresse des adresses IP et Ethernet d'un périphérique de réseau (B) destinataire dont l'adresse est incluse dans la demande de protocole de résolution d'adresse, et pour envoyer une réponse au périphérique de réseau (A) une fois que la mise en correspondance d'adresse est récupérée auprès du serveur (10).

17. Système selon la revendication 16,
**caractérisé en ce**
**que** le proxy de résolution d'adresse (25) apprend les mises en correspondance d'adresse des adresses IP et Ethernet du périphérique de réseau (B) destinataire auprès du serveur (10) et répond directement à la demande de protocole de résolution d'adresse du périphérique de réseau (A) si la mise en correspondance d'adresse est déjà connue de sa table de protocole de résolution d'adresse.
